# EUROPEAN PATENT APPLICATION

(11) **EP 1 211 677 A1**
(43) Date of publication of application: **05.06.2002**
(21) Application number: 00403397.3
(22) Date of filing: 04.12.2000
(51) Int. Cl.: G11B 7/12, G11B 17/028

(54) **Disk player with integrated lens cleaner and method for cleaning a lens**

(71) Applicant: Thomson Licensing S.A., 92648 Boulogne Cedex (FR)
(72) Inventor: Cui, Wei, Tai Cheung Kiu Rd, Sha Tin NT Hong-Kong (CN)
(74) Representative: Rossmanith, Manfred, Dr.

(57) **Abstract**

Within a disk player, like a CD or DVD player, an objective lens is focussing a scanning light beam onto the surface of the disk. In practice dust particles and contaminations accumulating on the surface of the objective lens can affect the optical scanning process and impair the quality of reproduced sound or picture.
It is desirable to provide cleaning means for the objective lens rendering the player less susceptible to influences of dust, contaminations and the like.
On the surface of the rotating member (8) facing the objective lens (7) electrically conducting brush elements (14) are mounted contacting the surface of the objective lens (7) for cleaning said surface during rotation of the rotating member (8). Preferably, a charge sink in form of a metallic ring of copper (16) is associated to the brush elements (14) for deriving charges accumulating on the objective lens (7) and the brush elements (14).

## Description

The present invention relates to an apparatus for optically reading signals from a disk according to claim 1. The invention also relates to a method for optically reading signals from a disk according to claim 12. Particularly the invention relates to means for regularly and automatically cleaning the surface of the objective lens of the so-called pick-up unit for achieving proper reliability and quality of optically reading the disk and proper sound or picture reproduction. The disk may be, for example, a CD disk or a DVD disk.

Generally the disk is loaded within the player on a driving member or turntable driven by a motor. Underneath the disk a pick-up unit including an objective lens is provided focussing a scanning light beam onto the disk for scanning a spiral track on the disk. In practice dust particles or contaminations can accumulate on the surface of the objective lens disturbing or jeopardizing the optical scanning process and thereby the quality of the reproduced sound or picture.

In order to regularly and automatically remove such particles from the surface of the objective lens according to prior art a rotating member of the mechanism is provided with an integral fan formed by openings within the rotating member said openings including air blades inclined to the surface of the rotating member. During rotation of the rotating member said air blades work like an impeller and generate an air current directed onto the surface of the objective lens for removing said dust particles and contaminations. It was found that in practice such an air current cannot provide a sufficient cleaning effect of the surface. Many dust particles or contaminations remain on the surface after the cleaning process by the air current.

It is therefore desirable to modify the cleaning means of an apparatus for optically reading signals from a disk for the objective lens such that the reliability and quality of the optical scanning process is less affected or even not affected at all by dust and contaminations. In this way, a satisfactory quality of sound and/or picture reproduction is ensured over a long period of time.

This is achieved by the invention defined in apparatus claim 1 and in method claim 10. Advantageous embodiments and further developments of the invention are defined within the dependent sub claims.

That means according to the invention on the surface of the rotating member facing the objective lens electrically conducting brush elements are mounted contacting the surface of the objective lens for cleaning said surface during rotation of the rotating member.

The electrically conducting brush elements in fact fulfill two different functions. On the one hand they act as a real brush contacting the surface of the objective lens during rotation of the turntable especially performing a final cleaning of the objective lens to tiny embedded dirtiness, which cannot be removed by an air current from a fan also mounted on the turntable. On the other hand the electrically conduction property of the brush elements avoids or removes electrostatic charges on the objective lens and the brush elements which might attract dust particles and prevent or impede the removal of particles or contaminations from the surface of the objective lens.

The invention offers a number of advantages. First a regular, automatic and proper cleaning of the surface of the objective lens is achieved both for gross contaminations and for tiny embedded dirtiness as well as impressed, internal, residual and recycled dust particles and micro-fiber scratching or scuffing the lens surface. The cleaning mechanism enables the removal of particles with a size down to 10 µm from the surface of the objective lens. At the same time electrostatic charges or potential hazards at the surface of the objective lens, which might attract dust particles or hold particles on the surface are avoided by the electrostatic discharge (ESD) provided by the electrically conducting brush elements. Furthermore, the solution for achieving this result is rather simple, as it needs only few structural elements on the rotating member, which generally already is available in a disk player. Therefore a cost effective cleaner system is provided for such players ensuring proper cleaning results. The system can be implemented independent of the optical module used. It can easily be implemented or adapted to existing types of disk players.

Preferably a plurality of brush elements is mounted on the rotating member distributed along a circumference of the rotating member. In one embodiment of the invention the brush elements have the form of segments each extending along a part of the circumference of the rotating member.

According to an embodiment of the invention the brush elements are made of an electrically conducting plastic or of compressed micro-fiber. Such a conducting plastic may have a rather smooth surface and can properly act as an ultra soft brush without damaging the surface of the objective lens.

According to a further embodiment of the invention the brush elements are electrically connected to a common electrically conducting member especially made of copper mounted on the rotating member and acting as a charge sink for electrostatic charges accumulating at the objective lens and the brush elements. Said charge sink may have the form of a closed metallic copper ring positioned on the surface of the rotating member. All brush elements are electrically connected to said ring. Such a conducting ring can have a substantial mass or electrical charging capacity for deriving electrostatic charges which might arise at the brush elements electrically connected to said conducting ring.

According to a further development of the invention the rotating member additionally includes a fan directing an air current towards the surface of the objective lens to additionally cleaning said surface. The fan may be formed by openings within the rotating member said openings including air blades inclined with respect to the surface of the rotating member. Such a combination of brush elements and a fan provides a very effective cleaning of the surface of the objective lens. The air current generated by the fan particularly removes gross contaminations essentially not adhering at the surface of the objective lens whereas the brush elements particularly remove tiny embedded dirtiness which might adhere to the surface of the objective lens, e.g. by humidity or small electrostatic charges.

Within this further development preferably a plurality of segments each containing several openings forming a fan and a plurality of brush elements are alternating provided along a circumference of the rotating member. This version provides during rotation of the rotating member intermittent or interspersed cleaning operations alternating by the air current from the fan and by the brush elements contacting the surface of the objective lens.

The construction and operation of the inventive apparatus will now be described by way of an embodiment example depicted in the attached drawing. Within the drawing
Fig. 1 is a perspective view of a driving and scanning mechanism for a disk according to the present invention without an inserted disk,
Fig. 2 is a partial and perspective explosion view of the mechanism shown in Fig. 1,
Fig. 3 is a perspective top view of the rotating member alone,
Fig. 4 is a perspective view of the rotating member of Fig. 3 from the lower side,
Fig. 5 is a side view of said mechanism in the cleaning position with no disk being loaded and
Fig. 6 shows the mechanism of Fig. 5 in the playback position with a disk being loaded within the mechanism.

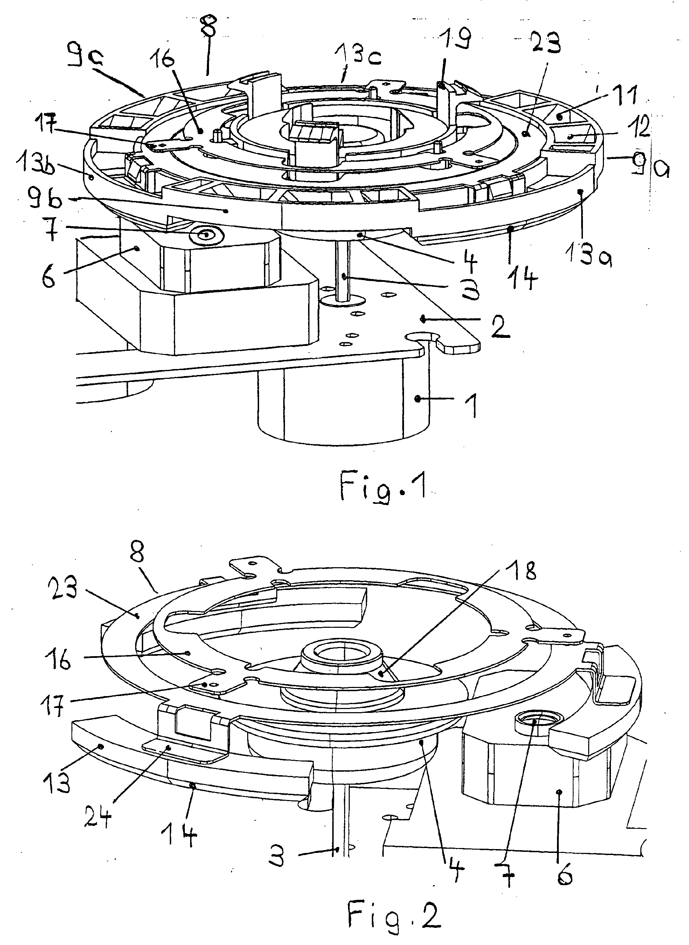

Figure 1 shows the scanning mechanism of a disk player like a CD or DVD player. A motor 1 mounted on a chassis plate 2 is drivingly connected by a shaft 3 to a driving member or turntable 4 adapted for providing a rotational movement of a disk (not shown in Fig. 1). The chassis plate 2 also carries a pick-up-unit 6 including an objective lens 7 at its topside focussing a scanning light beam onto the disk for scanning a spiral track on the disk. Above the mechanism, a rotating member 8 (often called "puck") is provided which in operation of the player rotates together with the turntable 4. The disk is inserted and clamped between the topside of turntable 4 and the bottom side of rotating member 8. The rotating member 8 includes along its circumference three sections 9a, 9b, and 9c each including an opening 11 extending from the topside to the bottom side of the rotating member 8. Each opening 11 includes several air blades 12 inclined with respect to the surfaces of the rotating member 8. During rotation of rotating member 8 the air blades 12 work as a fan or impeller generating an air current in direction to the surface of the objective lens 7 for cleaning the surface of the lens 7. In particularly, the air current removes gross contaminations accumulating on said surface. In the spacings between said segments 9a, 9b, 9c further segments 13a, 13b, 13c are provided each containing at its bottom side an electrically conducting brush element 14 which may be made, for example, of an electrically conducting plastic or compressed micro-fiber forming an ultra soft surface. Each brush element 14 is arranged in such a way that it can smoothly contact the surface of objective lens 7 during rotation of member 8.

Further the brush elements 14 are electrically conducting and are electrically connected to a common ring 23 made of metal and being supported on the topside of rotating member 8. The ring 12 is connected to tabs 17 of a further closed ring 16 also made of metal, preferably copper, and being supported by rotating member 8. The ring 16 acts as a charge sink as will be described later in combination with the mode of operation.

Furthermore, the rotating member 8 includes at its topside three hook-like projections 19. By these projections 19 the rotating member 8 can be gripped by a lever-like member (not shown) and can be raised from turntable 4 for inserting a disk between turntable 4 and rotating member 8 in radial direction.

In operation, the turntable 4 and the rotating member 8 are rotated by motor 1 before loading a disk between turntable 4 and rotating element 8. The pick-up unit 6 is driven to such a radial position that segments 9a, 9b, 9c and segments 13a, 13b, 13c rotate above objective lens 7 and the brush elements 14 smoothly contact the surface of objective lens 7. In this way during rotation of turntable 4 and rotating member 8 alternating segments 9a, 9b, 9c and brush elements 14 come into a position directly above objective lens 7. The air current generated by the air blades 12 and directed onto the surface of objective lens 7 cleans the surface of objective lens 7 particularly removing gross contaminates which might be accumulated on said surface. On the other hand brush elements 14 smoothly contacting the surface of objective lens 7 perform final cleaning to tiny embedded dirtiness or any similar particles as mentioned above which cannot be sufficiently removed by the mere air current.

Electrostatic charges on the objective lens 7 and the brush elements 14 might undesirably attract dust particles or might impede removal of dust particles. As the electrically conducting brush elements 14, the ring 23 and the charge sink ring 16 are electrically interconnected this combination forms a high mass or charge capacity. Thereby electrostatic charges or potential hazards at the surface of objective lens are drained by charge sink ring 16.

Fig. 2 shows how the segments 13 carrying the brush elements 14 at their underside are mounted at the rotating member 8. The topsides of the segments 13 are fastened to the ends of Z-shaped tabs 24 each forming an integral part of ring 23 mounted on rotating member 8. The tabs 17 forming an integral part of charge sink ring 16 are mechanically and electrically connected to ring 23. Electrically conducting brush elements 14 are electrically connected via segments 13, tabs 24, ring 23 and tabs 17 to charge sink ring 16. So charges, which might accumulate at the surface of objective lens 7 and brush elements 14 are derived towards ring 16 so reducing or avoiding potential hazards by electrostatic discharge (ESD). Fig. 2 also shows a conical mandrel 18 being an integral part of turntable 4 and engaging the central hole of the disk (not shown in Fig. 2) inserted between turntable 4 and rotating member 8. The weight of the rings 16, 23 also improves the clamping of the disk.

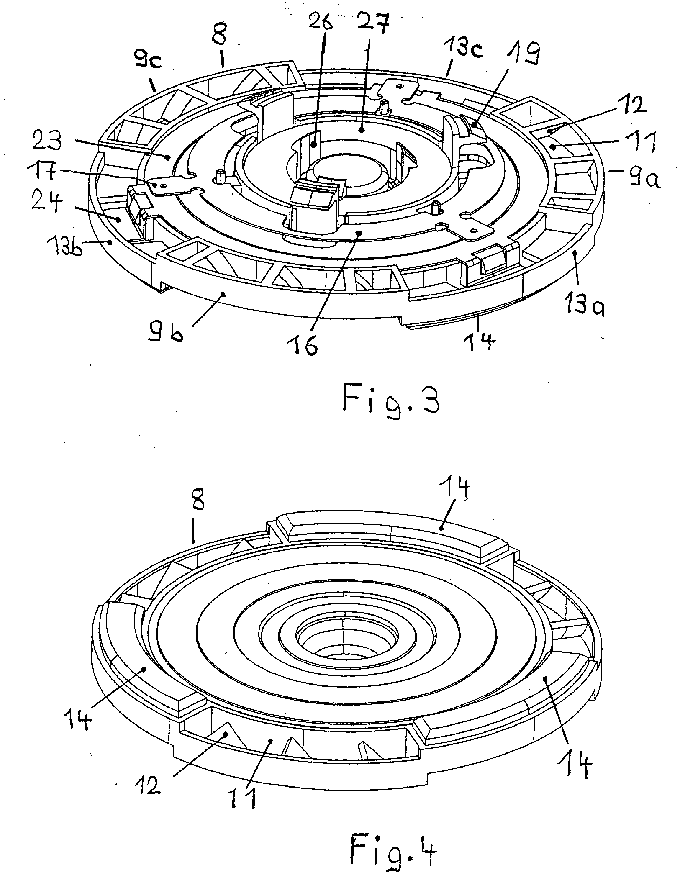

Fig. 3 is a top view of rotating member 8 of Fig. 1 alone without turntable 4 and without a disk. Three hook-like projections 26 are provided for clipping a magnetic ring 27, which is used for clamping the disk between turntable 4 and rotating member 8 during playback operation. Fig. 4 shows the structure of Fig. 3 from the bottom side.

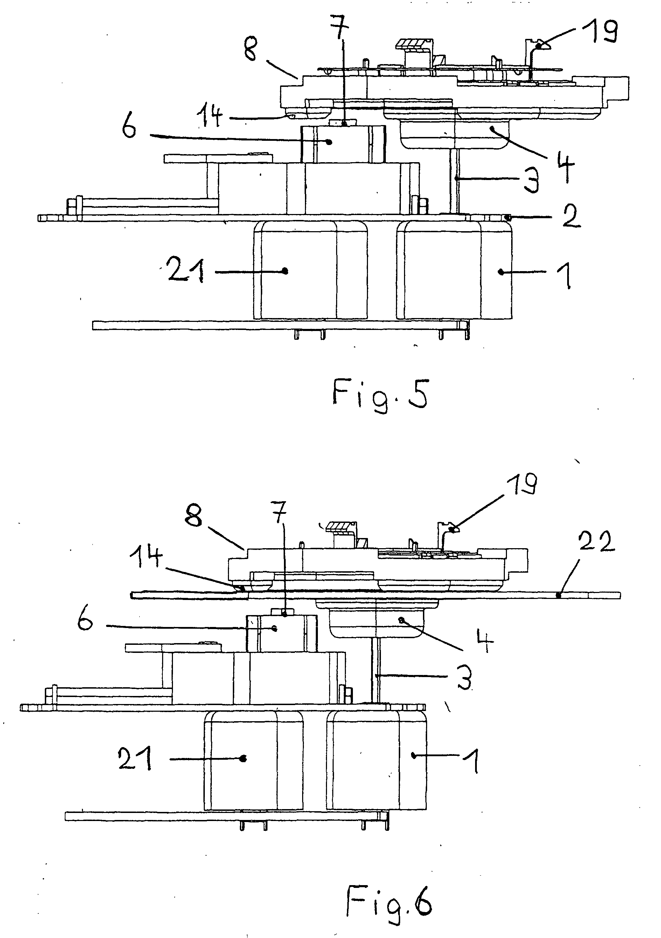

Fig. 5 schematically shows the unit of Fig. 1 in a position for the cleaning process without an inserted disk. The height position of rotating member 8 with respect to pick-up unit 6 and the radial position of pick-up unit 6 are adjusted to such values that brush elements 14 smoothly contact the surface of objective lens 7 for the cleaning process as described. Additionally a motor 21 controlling the radial movement of pick-up unit 6 for scanning the disk is depicted.

Fig. 6 shows the unit of Fig. 5 in a position for scanning the disk, that means for the playback mode. The rotating member 8 is raised with respect to pick-up unit 6 compared with Fig. 5. A disk 22 is inserted between turntable 4 and rotating member 8 and clamped between said elements. Disk 22 is rotationally driven by motor 1. The motor 21 moves the pick-up unit 21 in radial direction with regard to the disk. The objective lens 7 focuses a scanning light beam onto the underside of disk 22 carrying a spiral track with audio and/or video signals optically recorded along the track. Obviously, in this status with an inserted disk the cleaning process for objective lens 7 as described is not possible due to the presence of disk 22 between rotating member 8 and pick-up unit 6.

In an embodiment of the invention a software program executed by a micro controller controls the cleaning process. Depending on the type of software the cleaning process is performed on user demand, occasionally, regularly or in response to a decreased quality of the output of the pick-up or subsequent signal processing circuits.

### List of reference numerals

- 1: motor
- 2: chassis plate
- 3: driving shaft
- 4: turntable
- 5: -
- 6: pickup-unit
- 7: objective lens
- 8: rotating member
- 9: segment
- 10: -
- 11: opening
- 12: air blade
- 13: segment
- 14: brush element
- 15: -
- 16: charge sink ring
- 17: tab
- 18: conical mandrel
- 19: projections
- 20: -
- 21: motor
- 22: disk
- 23: ring
- 24: tabs
- 25: -
- 26: projections
- 27: magnetic ring

## Claims

1. Apparatus for optically reading signals from a disk including an objective lens (7) for focussing a scanning light beam onto the disk being rotated by a motor (1) **characterized in that**
on the surface of the rotating member (8) facing the objective lens (7) electrically conducting brush elements (14) are mounted contacting the surface of the objective lens (7) for cleaning said surface during rotation of the rotating member (8).

2. Apparatus according to claim 1, **characterized in that** a plurality of brush elements (14) are mounted on the rotating member (8) distributed along a circumference of the rotating member (8).

3. Apparatus according to claim 1, **characterized in that** the brush elements (14) are made of an electrically conducting plastic.

4. Apparatus according to claim 1, **characterized in that** the brush elements (14) are made of compressed micro-fibre.

5. Apparatus according to claim 1, **characterized in that** the brush elements (14) are electrically connected to a common electrically conducting member (16) mounted on the rotating member (8) and acting as a charge sink for electrostatic charges accumulating at the objective lens (7) and the brush elements (14).

6. Apparatus according to claim 5, **characterized in that** said charge sink has the form of a closed metallic ring (16) positioned on the top surface of the rotating member (8) all brush elements (14) being electrically connected to said ring (16).

7. Apparatus according to claim 1, **characterized in that** the rotating member (8) includes a fan directing an air current towards the surface of the objective lens (7) for cleaning said surface.

8. Apparatus according to claim 7, **characterized in that** a plurality of segments (9a, b, c) each containing several air blades (12) are provided along a circumference of the rotating member (8).

9. Apparatus according to claim 7, **characterized in that** a plurality of brush elements (14) and a plurality of openings (11) forming a fan are interspersed along a circumference of the rotating member (8).

10. Method for automatically cleaning the surface of the objective lens of a pick-up unit focussing a light beam onto the surface of a rotating disk in a disk player including a rotating member
**characterized in that**
in an alternating way an air current generated by a fan is directed onto the surface of an objective lens (7) and a brush element (14) is contacting the surface of the objective lens (7).
